# EUROPEAN PATENT APPLICATION

(11) **EP 2 211 214 A1**
(43) Date of publication of application: **28.07.2010**
(21) Application number: 08849609.6
(22) Date of filing: 13.11.2008
(51) Int. Cl.: G02B 6/12, C08F 2/44, C08F 265/04

(54) **RESIN COMPOSITION FOR OPTICAL WAVEGUIDE AND OPTICAL WAVEGUIDE**

(30) Priority: 15.11.2007 JP 2007296390
(71) Applicant: Hitachi Chemical Company, Ltd., Tokyo 163-0449 (JP)
(72) Inventor: TAKASAKI, Toshihiko, Tsukuba-shi Ibaraki 300-4247 (JP); OCHIAI, Masami, Tsukuba-shi Ibaraki 300-4247 (JP); TAKAHASHI, Atsushi, Tsukuba-shi Ibaraki 300-4247 (JP)
(74) Representative: HOFFMANN EITLE
(86) International application number: PCT/JP2008/070696
(87) International publication number: WO 2009/063945

(57) **Abstract**

The present invention relates to a resin composition for an optical waveguide comprising (A) a photopolymerizable monomer, (B) a binder polymer and (C) a photoinitiator, wherein the photopolymerizable monomer (A) contains a hydroxyl group-containing fluorinated mono(meth)acrylate base compound.

Provides are a resin composition for an optical waveguide which has a high transparency in a wavelength of 1.3 µm and which is excellent in formation of a thick film and an adhesive property and an optical waveguide prepared by using the same.

## Description

### BACKGROUND OF THE INVENTION

The present invention relates to a resin composition for an optical waveguide which is excellent in a transparency in a wavelength of 1.3 µm and an optical waveguide prepared by using the same.

### RELATED ART

In order to meet an increase in an information capacity involved in spreading of internet and LAN (local area network), promoted is development of optical interconnection techniques in which optical signals are used not only in the telecommunication sector such as main lines and access systems but also between boards in routers and server devices or for short-range signal transmission in boards. In the above case, optical waveguides which have a high freedom of wiring as compared with those of optical fibers and which make a higher density possible are preferably used as an optical transmission channel. Among them, optical waveguides prepared by using polymer materials which are excellent in a processability and an economical efficiency art promising. Polymer optical waveguides are used between boards in routers and server devices or for optical signal transmission in boards, and therefore they assume a structure in which they coexist with electric wiring boards. Fluorinated polyimides (for example, a patent document 1), deuterated silicone resins (for example, a non-patent document 1) and epoxy resins (for example, a non-patent document 2) are proposed as materials for the above optical waveguides.

On the other hand, in respect to a transparency which is the most important characteristic in an optical waveguide, a characteristic absorption of an aliphatic CH group is present in the vicinity of 1.3 µm, and therefore it is tried to introduce a fluorine atom thereinto in order to reduce the above absorption (a patent document 2 and a non-patent document 3). However, fluorine-containing resins have involved the problems that it is difficult to form films, particularly thick films having a thickness of several ten µm and that they have an inferior adhesive property with base materials or other fluorine-containing resins.

Patent document 1: Japanese Patent No. 3085666
Patent document 2: Japanese Patent Application Laid-Open (through PCT) No. 502718/2003
Non-patent document 1: IEEE Journal of Lightwave Technology, Vol. 16, pp. 1049 to 1055, 1998
Non-patent document 2: Optics, vol. 31, No. 2, pp. 81 to 87, 2002
Non-patent document 3; Proc. SPIE Int. Soc. Opt. Eng., Vol. 6331 63310P-1 to 63310P-8 (2006)

### DISCLOSURE OF THE INVENTION

In general, fluorine-containing resins are excellent in a water resistance and an oil resistance and have a low friction, and therefore they are widely used as paints and various coating materials. However, they involve the defects that they have a small surface tension and therefore have a poor adhesive property with other materials and that it is difficult to form thick films. Further, fluororesins are inferior in a compatibility with non-fluororesins, and it is difficult to secure the transparency in using them as an optical material.
In light of the above problems, an object of the present invention is to provide a resin composition for an optical waveguide which has a high transparency in a wavelength of 1.3 µm and which is excellent in formation of a thick film and an adhesive property and an optical waveguide prepared by using the same.

Intensive investigations repeated by the present inventors in order to solve the problems described above have resulted in finding that use of a resin composition comprising (A) a photopolymerizable monomer, (B) a binder polymer and (C) a photoinitiator, wherein a photopolymerizable fluorine-containing monomer into which a hydroxyl group is introduced is used as the photopolymerizable monomer of the component (A) makes it possible to enhance the adhesive property and the thick film-forming property and makes it possible as well to secure the transparency. The present invention has been completed based on the above knowledge.

That is, the present invention provides:
(1) a resin composition for an optical waveguide comprising (A) a photopolymerizable monomer, (B) a binder polymer and (C) a photoinitiator, wherein the photopolymerizable monomer (A) contains a hydroxyl group-containing fluorinated mono(meth)acrylate base compound,
(2) the resin composition for an optical waveguide according to the above item (1), wherein the hydroxyl group-containing fluorinated mono(meth)acrylate base compound is represented by the following Formula (T):

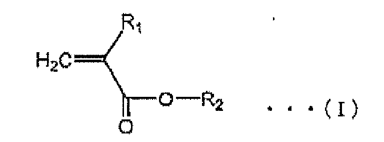

(in Formula (I), R₁ is hydrogen or an alkyl group having 1 to 4 carbon atoms which may have a substituent, and R₂ is a monovalent organic group containing a hydroxyl group and fluorine),
(3) the resin composition for an optical waveguide according to the above item (2), wherein the compound represented by Formula (I) is epoxy (meth) acrylate,
(4) the resin composition for an optical waveguide according to the above item (2), wherein R₂ in Formula (I) is represented by the following Formula (II);

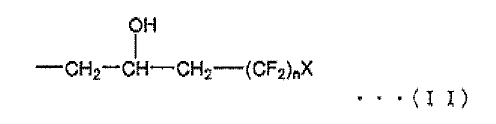

(n is an integer of 1 to 20, and X is hydrogen or fluorine), (5) the resin composition for an optical waveguide according to any of the above items (1) to (4), wherein the photopolymerizable monomer (A) further contains at least one multifunctional (meth) acrylate,
(6) the resin composition for an optical waveguide according to any of the above items (1) to (5), wherein a content of the hydroxyl group-containing fluorinated mono (meth) acrylate base compound in the component (A) is 0.1 to 100 % by mass,
(7) the resin composition for an optical waveguide according to any of the above items (1) to (6), wherein a content of the binder polymer (B) is 0.5 to 90 % by mass based on a total amount of the component (A) and the component (B),
(8) the resin composition for an optical waveguide according to any of the above items (1) to (7), wherein a content of the photoinitiator (C) is 0.1 to 10 parts by mass based on a total amount 100 parts by mass of the component (A) and the component (B),
(9) a resin varnish for forming an optical waveguide comprising the resin composition according to any of the above items (1) to (8) and an organic solvent,
(10) a film for forming an optical waveguide prepared by using the resin composition according to any of the above items (1) to (8),
(11) an optical waveguide prepared by using the resin composition according to any of the above items (1) to (8) as a material for a core,
(12) an optical waveguide prepared by using the resin composition according to any of the above items (1) to (8) as a material for a cladding,
(13) an optical waveguide prepared by using the resin varnish for forming an optical waveguide according to the above item (9) as a material for a core,
(14) an optical waveguide prepared by using the resin varnish for forming an optical waveguide according to the above item (9) as a material for a cladding,
(15) an optical waveguide prepared by using the film for forming an optical waveguide according to the above item (10) as a material for a core and
(16) an optical waveguide prepared by using the film for forming an optical waveguide according to the above item (10) as a material for a cladding.

The resin composition for forming an optical waveguide according to the present invention is excellent in a compatibility of the respective components, has a high transparency in a wavelength of 1.3 µm and makes it possible to readily form a thick film which is excellent in an adhesive property. Also, an optical waveguide prepared by using the above resin composition has a high transparency in a wavelength of 1.3 µm.

### BEST MODE FOR CARRYING OUT THE INVENTION

The resin composition for forming an optical waveguide according to the present invention is characterized by comprising (A) a photopolymerizable monomer, (B) a binder polymer and (C) a photoinitiator, wherein the photopolymerizable monomer (A) contains a hydroxyl group-containing fluorinated mono (meth) acrylate base compound.
The hydroxyl group-containing fluorinated mono(meth) acrylate base compound (hereinafter referred to merely as the mono (meth) acrylate base compound) is monofunctional (meth)acrylate or 2-alyklpropenoate (the alkyl group has 2 or more carbon atoms and may have a substituent) having a hydroxyl group and a fluorine atom in a molecule, and it includes suitably a compound represented by the following Formula (I):

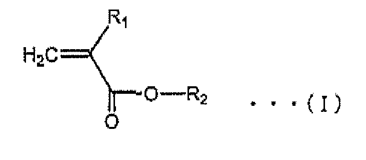

in Formula (I), R₁ is hydrogen or an alkyl group having 1 to 4 carbon atoms which may have a substituent, and R₂ is a monovalent organic group containing a hydroxyl group and fluorine. In this regard, R₁ in Formula (I) is preferably hydrogen or methyl from the viewpoint of a radical polymerizability of an adjacent double bond. Also, R₂ in Formula (I) shall not specifically be restricted as long as it is a monovalent organic group containing a hydroxyl group and fluorine, and it is preferably a group represented by the following Formula (II) from the viewpoint of easiness of production:

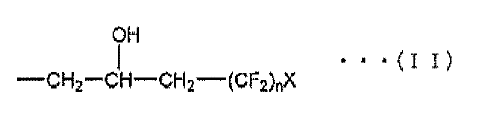

wherein n is an integer of 1 to 20, preferably an integer of 2 to 10, and X is hydrogen or fluorine.

The mono(meth)acrylate base compound represented by Formula (I) has a hydroxyl group and a fluorine atom in a molecule, and a photopolymerizable site is mono(meth)acrylate or mono-2-alyklpropenoate (the alkyl group has 2 to 4 carbon atoms and may have a substituents). Among them, the mono(meth)acrylate is preferred from the viewpoint that it is readily reacted by a photoradical generating agent and that it has a rapid reaction rate. The substituent in the alkyl group of mono-2-alyklpropenoate includes a halogen atom and the like.
The preferred embodiment of the mono(meth)acrylate base compound represented by Formula (I) includes epoxy (meth)acrylate,

The epoxy (meth)acrylate represented by Formula (I) includes epoxy (meth)acrylates to which a linear Fluorinated alkyl group is bonded, such as 3-perfluoromethyl-2-hydroxypropyl (meth)aarylate, 3-perfluoroethyl-2-hydroxypropyl (meth)acrylate, 3-perfluoropropyl-2-hydroxypropyl (meth)acrylate, 3-perfluorobutyl-2-hydroxypropyl (meth)acrylate, 3-perfluoropentyl-2-hydroxypropyl (meth)acrylate, 3-perfluorohexyl-2-hydroxypropyl (meth)acrylate, 3-perfluoroheptyl-2-hydroxypropyl (meth) acrylate, 3-perfluorooctyl-2-hydroxypropyl (meth) acrylate, 3-perfluornnonyl-2-hydroxypropyl (meth)acrylate, 3-perfluorodecyl-2-hydroxypropyl (meth)acrylate, 3-(2,2-difluoroethoxy)-2-hydroxypropyl (meth)acrylate, 3-(2,2, 3,3-tetrafluoropropoxy)-2-hydroxypropyl (meth)acrylate, 3-(1H,1H,4H-hexafluorobutoxy)-2-hydroxypropyl (meth)acrylate, 3-(1H,1H,5H-octafluoropentyloxy)-2-hydroxypropyl (meth) acrylate, 3-(1H,1H,6H-decafluorohexyloxy)-2-hydroxypropyl (meth)acrylate, 3-(1H,1E,7H-dodecafluoroheptyloxy)-2-hydroxypropyl (meth)acrylate, 3-(1H,1H,8H-tetradecafluorooctyloxy)-2-hydpoxypropyl (meth)acrylate, 3-(1H,1H,9H-hexadecafluorononyloxy)-2-hydroxypropyl (meth)acrylate and the like. In addition thereto, it includes epoxy (meth)acrylates to which a branched fluorinated alkyl group is bonded, epoxy (meth)acrylates to which an alicyclic fluorinated alkyl group is bonded, epoxy (meth)acrylates to which a fluorinated aromatic group is bonded and the like. The epoxy (meth)acrylate may be, in addition to the structure described above, a mixture with a 1-(hydroxymethyl)-ethyl (meth)acrylate structure which is by-produced in reaction of epoxy resins with (meth)acrylic acid. Among them, epoxy (meth)acrylates such as 3-perflucrobutyl-2-hydroxypropyl (meth) acrylate, 3-perfluorohexyl-2-hydroxypropyl (meth)acrylate and 3-perfluorooctyl-2-hydroxypropyl (meth)acrylate are preferred from the viewpoint of easiness of production.

The mono(meth)acrylate base compound represented by Formula (1) includes, in addition to the epoxy (meth)acrylates, (meth)acrylates such as 3-hydroxy-2,2-difluoropropyl (meth)acrylate, 4-hydroxy-2,2,3,3-tetrafluorobutyl (meth)acrylate, 5-hydroxy-1H,1H,5H,5H-perfluoropentyl (meth)acrylate, 6-hydroxy-1H,1H,6H,6H-perfluorohexyl (meth) acrylate, 7-hydroxy-1H,1H,7H,7H-perfluoroheptyl (meth)acrylate, 8-hydroxy-1H,1H,8H,8H-perfluorooctyl (meth)aceylate, 9-hydroxy-1H,1H,9H,9H-perfluozoncnyl (meth)acrylate, 10-hydroxy-1H,1H,10H,10H-perfluorodecyl (meth)acrylate and the like and branched compounds thereof. They may contain two or more hydroxyl groups. Among them, the mono(meth)acrylate base compounds such as 5-hydroxyl-1H,1H,5H,5H-perfluoropentyl (meth)acrylate, 6-hydroxy-1H,1H,6H,6H-perfluorohexyl (meth)acrylate, 7-hydroxy-1H,1H,7H,7H-perfluoroheptyl (meth)acrylate and the like preferred from the viewpoint of easiness of production.

A content of the mono(meth)acrylate base compound in the component (A) is preferably 0.1 to 100 % by mass. If a content of the mono(meth)acrylate base compound is 0.1 % by mass or more, a compatibility between the components constituting the resin composition for an optical waveguide can be secured. The mono(meth)acrylate base compound can be used alone in combination of two or more kinds thereof.

Multifunctional (meth)acrylate in addition to the mono(meth)acrylate base compound described above is preferably allowed to be contained in the component (A). A three-dimensional network structure is provided by allowing the multifunctional (meth)acrylate to be contained, and the good cured matter is obtained. On the other hand, the multifunctional (meth)acrylate provides the excellent initial curing property, but it lowers the ultimate reaction rate and reduces the transparency in 1.3 µm. Further, it has the defect that it provides the inferior developability after exposure through a mask pattern. Accordingly, the contents of the mono(meth)acrylate base compound and the multifunctional (meth)acrylate in the component (A) have to be determined considering a balance between a compatibility and a curing property, and a content of the mono(meth)acrylate base compound in the component (A) is preferably 20 to 95 % by mass, more preferably 30 to 90 % by mass.
On the other hand, a content of the multifunctional (meth)acrylate in the photopolymerizable monomer (A) is preferably 99.9 % by mass or less, more preferably 5 to 80 % by mass and particularly preferably 10 to 70 % by mass.

A blend ratio of the mono(meth)acrylate base compound and the multifunctional (meth)acrylate in the photopolymerizable monomer (A) is preferably 100/0 to 0.1/99.9 (mass ratio), more preferably 95/5 to 20/80 (mass ratio) and particularly preferably 90/10 to 30/70 (mass ratio). If a ratio of the mono(meth)acrylate base compound is a fixed value or more, the compatibility is improved, and the transparency in 1.3 µm is enhanced.

Various difunctional (meth)acrylates and trifunctional or higher (meth)acrylates are used as the multifunctional (meth)acrylate described above.
The difunctional (moth)acxylate includes ethoxylated 2-methyl-1,3-propanedioi di(meth)acrylate, neopentyl glycol di(meth)acrylate, 1,6-hexanediol di(meth)acrylate, 2-methyl-1,8-octanediol di(meth)acrylate, 1,9-nonanediol di(meth)acrylate, 1,10-nonanediol di(meth)acrylate, ethoxylated polypropylene glycol di(meth)acrylate, propoxylated ethoxylated bisphenol A diacrylate, ethylene glycol di(meth)acrylate, triethylene glycol di(meth)acrylate, tetraethylene glycol di(meth)acrylate, polyethylene glycol di(meth)acrylate, polypropylene glycol di(meth)acrylate, ethoxylated bisphenol A di(meth)acrylate, tricyclodecane di(meth)acrylate, ethoxylated cyclohexanedimethanol di(meth)acrylate and the like and halogen-substituted compounds thereof with fluorine, chlorine and the like.

Further, the trifunctional or higher (meth)acrylate includes ethoxylated isocyanuric acid tri(meth)acrylate, ethoxylated glycerin tri(meth)acrylate, trimethylolpropane tri(meth)acrylate, ethoxylated trimethylolpropane tri(meth)acrylate, pentaerythritol tetra(meth)acrylate, ethoxylated pentaerythritol tetra(meth)acrylate, propoxylated pentaerythritol tetra(meth)acrylate, ditrimethylolpropane tetra(meth)acrylate, caprolactone-modifind ditrimethylolpropane tetra(meth)acrylate, dipentaerythritol hexa(meth)acrylate and the like and halogen-substituted compounds thereof with fluorine, chlorine and the like. They can be used alone or in combination of two or more kind thereof.
In the present invention, the difunctional (meth)acrylate such as neopentyl glycol di(meth)acrylate, 1,6-hexanediol di(meth)acrylate, ethylene glycol di(meth)acrylate and the like or the trifunctional or higher (meth)acrylate such as ethoxylated trimethylolpropane tri(meth)acrylate, ethoxylated isocyanuric acid tri(meth)acrylate, dipentaerythritol hexa(meth)acrylate and the like is preferably used as the multifunctional (meth)acrylate from the viewpoint of a compatibility with the other compositions.

Further, monomers other than the (meth)acrylates can be allowed to be contained in the photopolymerizable monomer (A), and monomers having a reactive group such as an epoxy group, an oxetane group, a vinyl group, a vinyl ester group, a vinyl ether group and the like may be contained therein. The above monomers can be used alone or in combination of two or more kind thereof.

At least one (meth)acrylate selected from 3-perfluorobutyl-2-hydroxypropyl (meth)acrylate, 3-perfluorohexyl-2-hydroxypropyl (meth)acrylate and 3-perfluorooctyl-2-hydroxypropyl (meth)acrylate and at least one multifunctional (meth)acrylate selected from neopentyl glycol di(meth)acrylate, 1,6-hexanediol di(meth)acrylate, ethylene glycol di(meth)acrylate, ethoxylated trimethylolpropane tri(meth)acrylate, ethoxylated isocyanuric acid tri(meth)acrylate and dipentaerythritol hexa(meth)acrylate are preferably used as the photopolymerizable monomer (A) of the present invention in a ratio of 95/5 to 20/80 (mass ratio) from the viewpoint of the physical properties of the cured matter. Among them, preferably used from the viewpoint of a compatibility are 3-perfluorobutyl-2-hydroxypropyl (meth)acrylate and ethoxylated isocyanuric acid tri(meth)acrylate in a ratio of 95/5 to 60/40 (mass ratio) and 3-perfluorobutyl-2-hydroxypropyl (meth)acrylate and 1,6-hexanediol di(meth)acrylate in a ratio of 95/5 to 60/40 (mass ratio).

Next, when forming a cured matter such as a film and the like, the binder polymer which is the component (B) in the present invention is used for securing a strength thereof, and it has to have a transparency. A resin used as the binder polymer includes, for example, (meth)acryl resins, polycarbonate resins, polyallylate resins, polyetherimide, polyimide, polyallyl ether, polyether sulfone, polystyrene, styrene/acrylonitrile copolymers, styrene/(meth)acrylate copolymers, polycyanurate, alicyclic resins and the like and derivatives thereof. The above base polymers may be used alone or in a mixture of two or more kind thereof. A compatibility of the above resins with the photopolymerizable monomer (A) is important for securing a transparency of the corresponding cured matter. From this point of view, (meth)acryl resins containing fluorine in a repetitive unit are preferred, and among them, resins such as methyl methacrylate/fluorinated methacrylate copolymers, methyl acrylate/fluorinated methacrylate copolymers and the like are more preferred.

A molecular weight of the binder polymer (B) is preferably 5000 or more, more preferably 10000 or more and particularly preferably 30000 or more in terms of a number average molecular weight in order to make it possible to form a thick film having a thickness of about 50 µm which is required to optical waveguides for optical signal transmission. An upper limit of the molecular weight shall not specifically be restricted, and from the viewpoints of the compatibility with the photopolymerizable monomer (A) and the exposure developability, it is preferably 1000000 or less, more preferably 500000 or less and particularly preferably 300000 or less.

A blend amount of the binder polymer (B) is preferably 5 to 90 % by mass based on a total amount of the component (A) and the component (B). If the above blend amount is 5 % by mass or more, a film having a large thickness can readily be formed. On the other hand, if it is 90 % by mass or less, it becomes easy to introduce the photopolymerizable monomer (A) thereinto and cure it. From the above viewpoint, a blend amount of the binder polymer (B) is more preferably 10 to 80 % by mass.

The photoinitiator of the component (C) in the present invention shall not specifically restricted and includes, for example, aromatic ketones such as benzophenone, N,N'-tetramethyl-4,4'-diaminobenzophenone (Michler's ketones), N,N'-tetraethyl-4,4'-diaminobenzophenone, 4-methoxy-4'-dimethylaminobenzophenone, 2-benzyl-2-dimethylamino-1-(4-morpholinophenyl)-butane-1-one, 2,2-dimethoxy-1,2-diphenylethane-1-one, 1-hydroxycyclohexyl phenyl ketone, 2-hydroxy-2-methyl-1-phennylpropane-1-one, 1-[4-(2-hydroxyethoxy)phenyl]-2-hydroxy-2-methyl-1-propane-1-one, 1,2-methyl-1-14-(methylthio)phenyl]-2-morpholinopropane-1-one and the like; quinones such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, 2,3-dimethylanthraquinone and the like; benzoin ether compounds such as benzoin methyl ether, benzoin ethyl ether, benzoin phenyl ether and the like; benzoin compounds such as benzoin, methylbenzoin, ethylbenzoin and the like; benzyl derivatives such as benzyl dimethyl ketal and the like; 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, 2-(p-methoxyphenyl)-4,5-diphenylimidazole dimer and the like; phosphine oxides such as bis(2,4,6-trimethylbenzoyl)phenylphosphine oxide, bis(2,6-dimethoxybenzoyl)-2,4,4-trimethylpentylphosphine oxide, 2,4,6-trimethylbenzoyldiphenylphosphine oxide and the like; acridine derivatives such as 9-phenylacridine, 1,7-bis(9,9'-acridinyl)heptane and the like; N-phenylglycine, N-phenylglycine derivatives, coumarin base compounds and the like.

Further, in the 2,4,5-triarylimidazole dimer described above, two 2,4,5-triarylimidazoles may have the same substituents on the aryl groups to provide the symmetric compound or may have different substituents on the aryl groups to provide the asymmetric compound. Also, as is the case with combination of diethylthioxanthone and dimethylaminobenzoic acid, thioxanthone base compounds and tertiary amine compounds may be combined. They can be used alone or in combination of two or more kinds thereof. Among the compounds described above, the aromatic ketones and the phosphine oxides are preferred from the viewpoint of enhancing a transparency of the core layer and the cladding layer. Among them, resins such as 1-[4-(2-hydroxyethoxy)phenyl]-2-hydroxy-2-methyl-1-propane-1-one, bis(2,4,6-trimethylbenzoyl)phenylphosphine oxide and the like are more preferred.

A blend amount of the photoinitiator (C) described above is preferably 0.1 to 10 parts by mass based on the total amount 100 parts by mass of the component (A) and the component (B). If the above blend amount is 0.1 part by mass or more, the photosensitivity is sufficiently high. On the other hand, if it is 10 parts by mass or less, absorption on a surface layer of the photosensitive resin composition does not grow large in exposure, and photocuring is promoted sufficiently in the inside. Further, transmission loss caused by influence of light absorption by the polymerization initiator itself is not increased, and it is suited. From the viewpoints described above, a blend amount of the photoinitiator (C) is more preferably 0.2 to 5 parts by mass.

The resin composition for an optical waveguide according to the present invention can readily be produced by mixing the components (A) to (C) described above.
Further, a polymerization inhibitor for inhibiting reaction at room temperature and various additives for enhancing a film forming property can be added in addition to the components (A) to (C) described above. Also, various organic and inorganic fillers can be mixed in order to improve a quality of the film. The above compounds can be mixed in an optional proportion in a range in which the transparency is secured.

The resin composition for an optical waveguide according to the present invention may be diluted with an organic solvent and used as the resin varnish for forming an optical waveguide. The organic solvent used above shall not specifically be restricted as long as it can dissolve the above resin composition, and it includes, for example, acetone, tetrahydrofuran, methanol, ethanol, methyl ethyl ketone, methyl isobutyl ketone, cyclohexanone, ethyl acetate, butyl acetate, methyl lactate, ethyl lactate, γ-butyrolactone, methyl cellosolve, ethyl cellosolve, butyl cellosolve, ethyl cellosolve acetate, propylene glycol monomethyl ether, propylene glycol monomethyl ether acetate, toluene, xylene, N,N-dimethylformamide, N,N-dimethylacetamide, N-methylpyrrolidone and the like. Among them, acetone, methyl ethyl ketone, ethyl acetate and the like are preferred from the viewpoints of a solubility of the resin and a volatility.

The organic solvent shown above can be used alone or in combination of two or more kinds thereof. A concentration of the solid matters contained in the resin varnish is preferably 20 to 90 % by mass.

The resin composition for an optical waveguide according to the present invention which is converted into a film can be used as a film for forming an optical waveguide. In respect to a production method of the film for forming an optical waveguide, it can be produced by coating the resin varnish for forming an optical waveguide described above on a suitable base film and removing the solvent. Also, it may be produced as well by coating the resin composition for an optical waveguide directly on the base film.
In the film for forming an optical waveguide thus produced, a resin layer for forming an optical waveguide is formed on the base film, and a cover film may be formed as well thereon.

The base film shall not specifically be restricted and includes, for example, films of polyesters such as polyethylene terephthalate (PET), polybutylene terephthalate, polyethylene naphthalate and the like; polyolefins such as polyethylene, polypropylene and the like; polycarbonate, polyamide, polyimide, polyamideimide, polyetherimide, polyether sulfide, polyethersulfone, polyether ketone, polyphenylene ether, polyphenylene sulfide, polyallylate, polysulfone, liquid crystal polymers and the like. Among them, preferred from the viewpoints of a flexibility and a toughness are films of polyethylene terephthalate, polybutylene terephthalate, polyethylene naphthalate, polypropylene, polycarbonate, polyamide, polyimide, polyamideimide, polyphenylene ether, polyphenylene sulfide, polyallylate and polysulfone, and polyethylene terephthalate (PET) films are more preferred.
Further films subjected to mold release treatment with a silicone base compound, a fluorine-containing compound and the like may be used, if necessary, as the base film from the viewpoint of enhancing a release property from the resin composition layer.

A thickness of the base film may suitably be changed according to a flexibility targeted, and it is preferably 3 to 250 µm. It it is 3 µm or more, the film strength is sufficiently high, and if it is 250 µm or less, the satisfactory flexibility is obtained. From the viewpoints described above, the thickness is more preferably 5 to 200 µm, particularly preferably 7 to 150 µm. From the viewpoint of forming a detailed core pattern, a thickness of the base film is preferably 5 to 50 µm, more preferably 10 to 40 µm and further preferably 20 to 30 µm.

The film for forming an optical waveguide produced by coating the resin varnish for forming an optical waveguide or the resin composition for an optical waveguide on the base film may assume a three layer structure comprising the base film, the resin composition layer and the cover film in which the cover film is stuck, if necessary, on the resin layer as described above.
The base film and the cover film each described above may be subjected to antistatic treatment and the like in order to make it easy to peel off the film for forming an optical waveguide according to the use method.

The cover film shall not specifically be restricted and suitably includes, for example, films of polyesters such as polyethylene terephthalate, polybutylene terephthalate, polyethylene naphthalate and the like; polyolefins such as polyethylene, polypropylene and the like from the viewpoints of a flexibility and a toughness. Among them, polyethylene terephthalate (PET) films are particularly preferred. Further, films subjected to mold release treatment with a silicone base compound, a fluorine-containing compound and the like may be used, if necessary, from the viewpoint of enhancing a release property from the resin composition layer. A thickness of the cover film may suitably be changed according to a flexibility targeted, and it is preferably 10 to 250 µm. If it is 10 µm or more, the film strength is sufficiently high, and if it is 250 µm or less, the satisfactory flexibility is obtained.
From the viewpoints described above, the thickness is more preferably 15 to 200 µm, particularly preferably 20 to 150 µm.

A thickness of the resin composition layer in the film for forming an optical waveguide according to the present invention shall not specifically be restricted, and it is usually 5 to 500 µm in terms of a thickness after cured. If it is 5 µm or more, the thickness is sufficiently large, and therefore the film for forming an optical waveguide or a cured matter thereof has a satisfactory strength. If it is 500 µm or less, the film can sufficiently be dried, and therefore an amount of the solvent remaining in the film for forming an optical waveguide is not increased, so that the cured matter of the film for forming an optical waveguide is not foamed when heated.

The film for forming an optical waveguide thus obtained can readily be stored by rolling, for example, in a roll form.

Next, a method for forming an optical waveguide by using the resin composition for an optical waveguide, the resin varnish for forming an optical waveguide and the film for forming an optical waveguide according to the present invention as a cladding material and a core material shall be explained in details.
The method for forming an optical waveguide according to the present invention comprises a step for forming a resin layer for forming an optical waveguide as a cladding layer on a base material, a step for forming a resin layer for forming an optical waveguide as a core layer, a step for exposing a desired core pattern, a step for forming a core part by developing using an organic solvent or a developer of an alkaline aqueous solution after exposure and a step for forming a resin layer for forming an optical waveguide as an upper cladding layer.

The base material used for the optical waveguide of the present invention shall not specifically be restricted, and various materials can be used according to they uses thereof. They include, for example, silicon wafers, glass epoxy substrates, plastic substrates, metal substrates, substrates provided with a metal layer, rigid printed circuit boards thereof, polyimide substrates, plastic films such as PET films and the like, plastic films provided with a resin layer, plastic films provided with a metal layer, flexible printed circuit boards thereof, copper foils, glass and the like. The above substrates may be treated with an adhesion providing agent such as a coupling agent and the like and may be subjected to UV-ozone treatment, plasma treatment and the like in order to enhance an adhesive property with the resin composition. Also, various adhesives may be used. Further, the base material is provided with a release property and can be peeled off after producing the optical waveguide.

A process for forming the resin layer for forming the optical waveguide as a lower cladding layer, a core layer and an upper cladding layer shall not specifically be restricted, and it includes, for example, a method for coating the resin composition for an optical waveguide or the resin varnish for forming an optical waveguide according to the present invention by a spin coating method, a dip coating method, a spraying method, a bar coating method, a roll coating method, a curtain coating method, a gravure coating method, a screen coating method, an ink jet coating method and the like.
When using the resin varnish for forming an optical waveguide, a step for drying the resin layer after forming it may be provided if necessary. The drying method includes, for example, drying by heating, vacuum drying and the like. Also, they may be used, if necessary, in combination.

Another process for forming the photosensitive resin layer for forming an optical waveguide includes a method for forming it by a laminating method using the resin composition for an optical waveguide according to the present invention. Lamination is carried out preferably under reduced pressure from the viewpoint of the adhesive property and the followability.
Among them, a process for producing the resin layer by a laminating method using the resin film for forming an optical waveguide is preferred from the viewpoint of making it possible to provide a production process for an optical waveguide which is excellent in a productivity.

The method for forming the resin layer by a laminating method shall not specifically be restricted and includes, for example, a method for laminating the resin layer by pressing while heating by means of a roll laminator or a flat plate type laminator. In the present invention, the flat plate type laminator means a laminator in which a laminated material is interposed between a pair of flat plates and in which pressure is applied onto the flat plates to thereby press the laminated material, and a vacuum pressing type laminator can suitably be used. The heating temperature in the above method is preferably 20 to 130°C, and the pressing pressure is preferably 0.1 to 1.0 MPa, but the above conditions shall not specifically be restricted.
The photosensitive resin film for forming a lower cladding layer may be tentatively stuck in advance on the substrate by means of the roll laminator before laminated by means of the vacuum pressing type laminator. In this connection, the resin film is tentatively stuck preferably while pressing from the viewpoint of enhancing an adhesive property and a followability. In pressing, it may be carried out while heating by means of a laminator having a heat roll. The laminating temperature is preferably 20 to 130°C. If it is 20°C or higher, an adhesive property between the photosensitive resin film for forming a lower cladding layer and the substrate is enhanced. If it is 130°C or lower, the resin layer is not too fluid in roll lamination, and the required film thickness is obtained. From the viewpoints described above, the laminating temperature is more preferably 40 to 100°C. The pressure is preferably 0.2 to 0.9 MPa, and the laminating speed is preferably 0.1 to 3 m/minute, but the above conditions shall not specifically be restricted.

The process for producing the optical waveguide shall more specifically be described below.
First, the composition for forming an optical waveguide for forming a lower cladding layer or the resin varnish for forming an optical waveguide obtained by using the same is coated on the base material described above in a first step by a spin coating method and the like, or the film for forming an optical waveguide for forming a lower cladding layer is laminated by lamination and the like. When a cover film is present in the resin film for forming an optical waveguide for forming a lower cladding layer, the film is laminated preferably after or while removing the cover film.
The resin composition layer for forming a lower cladding layer which is coated or laminated on the substrate is optically cured to form a lower cladding layer. When a base film is present in the resin film for forming an optical waveguide for forming a lowed cladding layer, it may be removed thereafter.
An irradiation amount of an actinic ray in forming the lower cladding layer is preferably 0.1 to 5 J/cm², but the above conditions shall not specifically be restricted. When an actinic ray is transmitted through the base material, a double exposing equipment which makes it possible to irradiate both sides with an actinic ray at the same time can be used in order to carry out curing efficiently. Further, it may be irradiated with an actinic ray while heating.
Heating treatment of 50 to 200°C may be carried out, if necessary, as treatment after optically cured.

A thickness of the lower cladding layer is preferably 1 to 100 µm. If the thickness is 1 µm or more, light is sufficiently shut in, and if it is 100 µm or less, the film is readily formed. From the viewpoints described above, a thickness of the lower cladding layer falls in a range of preferably 3 to 80 µm, particularly preferably 5 to 50 µm.

Next, the resin composition for forming an optical waveguide for forming a core part or the resin varnish for forming an optical waveguide or the resin film for forming an optical waveguide obtained by using the same is coated or laminated on the lower cladding layer in a second step by the same method as in the first step to form a resin layer for forming a core part. In this connection, the resin composition for forming an optical waveguide for forming a core part is designed so that it has a higher refractive index than that of the resin composition for forming an optical waveguide for forming a lower cladding layer, and it comprises preferably the resin composition for forming an optical waveguide which can form a core pattern by an actinic ray. When the film for forming an optical waveguide is used, it is preferably laminated by means of a roll laminator.
A film thickness of the resin layer for forming a core part can be changed according to the uses of the optical waveguide, and usually it is preferably 20 to 80 µm in the case of a multimode waveguide.

Subsequently, the core part (core pattern) is exposed in a third step. A method for exposing the core pattern shall not specifically be restricted and includes, for example, a method in which the resin layer for forming a core part which is formed on the lower cladding layer is imagewise irradiated with an actinic ray through a negative or positive mask pattern called an art work preferably under a deoxidization condition such as nitrogen atmosphere and a method in which the resin layer is imagewise irradiated directly with an actinic ray using laser direct drawing without passing through a photomask. A light source of an actinic ray includes, for example, publicly known light sources which effectively radiate a UV ray, such as a carbon arc lamp, a mercury vapor arc lamp, a ultrahigh pressure mercury lamp, a high pressure mercury lamp, a xenon lamp, a metal halide lamp and the like. Further, in addition thereto, light sources which effectively radiate a visible light, such as a photographic flood bulb, a sun lamp and the like can be used as well. When the resin film for forming an optical waveguide is used for forming a core layer, it may be exposed after peeling the base film or may be exposed via the base films.
An irradiation amount of an actinic ray in exposing the core pattern is preferably 0.01 to 10 J/cm². If it is 0.01 J/cm² or more, the curing reaction sufficiently proceeds, and the core pattern is not lost by a developing step described later. If it is 10 J/cm² or less, the core pattern is prevented from increasing in a seize by excess exposure, and fine core patterns can suitably be formed. From the viewpoints described above, it is more preferably 0.05 to 5 J/cm², particularly preferably 0.1 to 3 J/cm².

When using the resin film for forming an optical waveguide for forming a core part, the core pattern may be exposed via the cover film or after removing the cover film.
After-exposure heating may be carried out, if necessary, after exposed from the viewpoint of enhancing a resolution and an adhesive property of the core pattern. Time elapsing from irradiation of a UV ray to after-exposure heating is preferably 10 minutes or shorter. If it is 10 minutes or shorter, active species produced by irradiation of a UV ray are not deactivated. A temperature of the after-exposure heating is preferably 40 to 160°C, and the time is preferably 30 seconds to 10 minutes.

Next, the unexposed part is developed in a fourth step by removing it by wet development, dry development and the like to produce a core pattern (core part). When exposure is carried out via the base film using the resin film for forming an optical waveguide for forming a core part, development is carried out after removing this. In the case of wet development, a developer meeting a composition of the resin film described above, such as an organic solvent, an alkaline aqueous solution, a water base developer and the like is used to carry out the development, for example, by a publicly known method such as a spray method, an oscillation dipping method, a brushing method, a scraping method, a puddle method, a spin method and the like. Also, the above developing methods may be used, if necessary, in combination.
Developers which are safe and stable and have a good operability, such as organic solvents, alkaline aqueous solutions and the like are preferably used as the developer. The organic solvent base developer includes, for example, 1,1,1-trichloroethane, N-methylpyrrolidone, N,N-dimethylformamide, N,N-dimethylacetamide, cyclohexanone, methyl isobutyl ketone, γ-butyrolactone, ethyl acetate, butyl acetate, various alcohols and the like. Water may be added to the above organic solvents in a range of 1 to 20 % by mass in order to prevent ignition.

Used as a base of the alkaline aqueous solution described are, for example, alkali hydroxides such as hydroxides of lithium, sodium and potassium; alkali carbonates such as carbonates or bicarbonates of lithium, sodium, potassium and ammonium; alkali metal phosphates such as potassium phosphate, sodium phosphate and the like; alkali metal pyrophosphates such as sodium pyrophosphate, potassium pyrophosphate and the like.
Also, the alkaline aqueous solution used for the development includes preferably, for example, dilute solutions of 0.1 to 5 % by mass of sodium carbonate, dilute solutions of 0.1 to 5 % by mass of potassium carbonate, dilute solutions of 0.1 to 5 % by mass of sodium hydroxide, dilute solutions of 0.1 to 5 % by mass of sodium tetraborate and the like.
A pH of the alkaline aqueous solution used for the development falls preferably in a range of 9 to 11, and a temperature thereof is controlled, in accordance with a developability of the layer of the photosensitive resin composition. A surfactant, a defoaming agent, a small amount of an organic solvent for accelerating the development and the like may be mixed in the alkaline aqueous solution.

The water base developer described above includes developers comprising water or an alkaline aqueous solution and at least one organic solvent. In this regard, the alkaline substances include, in addition to the substances described above, borax, sodium metasilicate, tetramethylammonium hydroxide, ethanolamine, ethylenediamine, diethylenetriamine, 2-amino-2-hydroxymethyl-1,3-propanediol, 1,3-diaminopropanol-2-morpholine and the like.
A pH of the developer is preferably as small as possible in a range in which the resist can be developed sufficiently well, and the pH is preferably 8 to 12, more preferably 9 to 10.

The organic solvent described above includes, for example, triacetone alcohol, acetone, ethyl acetate, alkoxyethanol having an alkoxy group having 1 to 4 carbon atoms, ethyl alcohol, isopropyl alcohol, butyl alcohol, diethylene glycol monomethyl ether, diethylene glycol monoethyl ether, diethylene glycol monobutyl ether and the like. They are used alone or in combination of two or more kinds thereof.
Usually, a concentration of the organic solvent is preferably 2 to 90 % by mass, and a temperature thereof can be controlled in accordance with a developability thereof. Small amounts of a surfactant, a defoaming agent and the like can be mixed as well in the water base developer.

The core pattern may be further cured, if necessary, by carrying out heating of 60 to 250°C or exposure of 0.1 to 1000 mJ/cm² as treatment after development.

Next, an upper cladding layer is formed on the core pattern in a fifth step by a coating or laminating method using the resin composition for an optical waveguide having a lower refractive index than that of the core or the resin varnish or the resin film obtained by using the same. A forming process therefor is the same as the forming process for the lower cladding layer. When using the film for forming an optical waveguide, it is laminated preferably by means of a roll laminator or a vacuum pressure laminator.

### EXAMPLES

The present invention shall more specifically be explained below with reference to examples, but the present invention shall by no means be restricted by these examples.

### Example 1

Blended (112 parts by mass of methyl ethyl ketone was used as a solvent) were 75 parts by mass of a fluorine-containing acryl polymer (trade name: Optoflon FM-450, manufactured by Daikin Industries, Ltd.), 20 parts by mass of hydroxyl group-containing fluorinated methacrylate (trade name: M-1433, 3-Perfluorobutyl-2-hydroxypropyl (meth)acrylate, manufactured by Daikin Industries, Ltd.) and 5 parts by mass of difunctional acrylate (2,2,3,3,4,4,5,5-octafluoro-1,6-hexyl diacrylate, manufactured by Synquest Labs. Inc.), and 2 parts by mass of a photoinitiator (mass ratio 1 : 1 mixture of trade name: Irgacure 819, manufactured by Ciba Specialty Chemicals K.K. and trade name: Irgacure 2959, manufactured by Ciba Specialty Chemicals K.K.) was added thereto to prepare a resin composition for a cladding. This was coated on a silicon wafer by a spin coating method and dried on the conditions of 80°C and 10 minutes to evaporate the solvent. In this case, a thickness of the film could optionally be controlled in a range of 5 to 50 µm by controlling a revolution in spin coating, and it was 20 µm in the present example.
A non-treated surface of a PET film (trade name: A1517, manufactured by Toyobo Co., Ltd.) was laminated thereon and irradiated with light of 1000 mJ/cm² (wavelength: 365 nm) by means of a ultrahigh pressure mercury lamp (MA-1000, manufactured by Dainippon Screen Mfg. Co., Ltd.), and after peeling the PET film, the wafer was heated at 120°C for one hour to obtain a lower cladding.

Next, blended (15 parts by mass of methyl ethyl ketone was used as a solvent) were 10 parts by mass of the fluorine-containing acryl polymer (trade name: Optoflon FM-450, manufactured by Daikin Industries, Ltd.), 60 parts by mass of the hydroxyl group-containing fluorinated methacrylate (trade name: M-1433, 3-perfluorobutyl-2-hydroxypropyl (meth)acrylate, manufactured by Daikin Industries, Ltd.) and 30 parts by mass of trifunctional acrylate (trade name: A-9300, manufactured by Shin-Nakamura Chemical Co., Ltd.), and 2 parts by mass of a photoinitiator (mass ratio 1 _{:} 1 mixture of trade name: Irgacure 819, manufactured by Ciba Specialty Chemicals K.K. and trade name: Irgacure 2959, manufactured by Ciba Specialty Chemicals K.K.) was added thereto to prepare a resin composition for a core. This was coated on the lower cladding prepared previously by a spin coating method and dried on the conditions of 80°C and 10 minutes to evaporate the solvent. In this case, a thickness of the film could optionally be controlled in a range of 5 to 100 µm by controlling a clearance (gap) of the applicator, and it was 10 µm in the present example.
A non-treated surface of the PET film (trade name: A1517, manufactured by Toyobo Co., Ltd.) was laminated thereon and irradiated with light of 1000 mJ/cm² (wavelength: 365 nm) by means of the ultrahigh pressure mercury lamp (MA-1000, manufactured by Dainippon Screen Mfg. Co., Ltd.), and after peeling the PET film, the wafer was heated at 120°C for one hour to obtain a core.

The refractive indices of the core layer and the cladding layer were measured by means of a prism coupler (Model 2010) manufactured by Metricon Co., Ltd. to find that they were 1.408 in the cladding layer and 1.440 in the core layer. A propagation loss of the slab optical waveguide prepared was measured by means of a waveguide loss measuring device (SPA-4000) manufactured by Sairon Technology, Inc. to find that it was 0.17 dB/cm in a wavelength of 1310 nm.

### Example 2

A waveguide was prepared in the same manner as in Example 1, except that 70 parts by mass of the hydroxyl group-containing fluorinated methacrylate (trade name: M-1433, 3-perfluorobutyl-2-hydroxypropyl (meth)acrylate, manufactured by Daikin Industries, Ltd.) and 20 parts by mass of trifunctional acrylate (trade name: TMP-A, manufactured by Kyoeisha Chemical Co., Ltd.) were used as the resin composition for a core. A refractive index of the core layer in the above case was 1.421. The waveguide loss was measured in the same manner as in Example 1 to find that it was 0.41 dB/cm.

### Example 3

A waveguide was prepared in the same manner as in Example 1, except that 70 parts by mass of the hydroxyl group-containing fluorinated methacrylate (trade name: M-1433, 3-perfluorobutyl-2-hydroxypropyl (meth) acrylate, manufactured by Daikin Industries, Ltd.) and 20 parts by mass of difunctional acrylate (trade name: 1,6HX-A, manufactured by Kyoeisha Chemical Co., Ltd.) were used as the resin composition for a core. A refractive index of the core layer in the above case was 1.422. The waveguide loss was measured in the same manner as in Example 1 to find that it was 0.42 dB/cm.

### Example 4

A lower cladding was prepared in the same manner as in Example 1, and the same resin composition as in Example 1 was coated thereon. A revolution in spin coating was controlled so that the thickness after cured was 50 µm, and the film was dried on the conditions of 80°C and 10 minutes to evaporate the solvent. A non-treated surface of the PET film (trade name: A1517, manufactured by Toyobo Co., Ltd.) was laminated thereon and irradiated with light of 200 mJ/cm² (wavelength: 365 nm) via a glass mask by means of the ultrahigh pressure mercury lamp (MA-1000, manufactured by Dainippon Screen Mfg. Co., Ltd.), and after peeling the PET film, the film was heated at 80°C for 5 minutes and developed with a mixed solvent of normal butyl acetate and isopropanol 1 : 1 (mass ratio) to obtain a core pattern having a width of 50 µm.
The same resin composition as in the lower cladding was laminated on a non-treated surface of the PET film (trade name: A1517, manufactured by Toyobo Co., Ltd.) by a cast method and dried at 80°C for 10 minutes to thereby obtain a film for an upper cladding. A thickness of the film was 80 µm. A substrate on which a core pattern was formed and the upper cladding film were laminated at a pressure of 0.4 MPa, a temperature of 80°C and a laminating speed of 0.2 m/minute by means of a roll laminator (HLM-1500, manufactured by Hitachi Chemical Co., Ltd.). It was irradiated with light of 1000 mJ/cm² (wavelength: 365 nm) by means of the ultrahigh pressure mercury lamp (MA-1000, manufactured by Dainippon Screen Mfg. Co., Ltd.), and after peeling the PET film, the film was heated at 120°C for one hour to obtain an embedded type waveguide.
A propagation loss of the optical waveguide prepared was measured using a semiconductor leaser of 1310 nm (Q81211, manufactured by Advantest Corporation) as a light source and Q81206 manufactured by Advantest Corporation as a light-sensitive sensor by a cut back method (measured waveguide length: 5, 3 and 2 cm, an input fiber: GI-50/125 multimode fiber (NA = 0.20) and an output fiber: GI-62.5/125 (NA = 0.22)) to find that it was 0.24 dB/cm.

### Comparative Example 1

Fluorinated methacrylate containing no hydroxyl group (trade name: M5210, manufactured by Daikin Industries, Ltd.) was used in place of the hydroxyl group-containing fluorinated methacrylate used for the resin composition for a core prepared in Example 1 to prepare a film, and the film became clouded after dried to make it impossible to measure a loss.

### Comparative Example 2

Fluorinated methacrylate containing no hydroxyl group (trade name: M1820, manufactured by Daikin Industries, Ltd.) was used in place of the hydroxyl group-containing fluorinated methacrylate used for the resin composition for a core prepared in Example 1 to prepare a film, and the film became clouded after dried to make it impossible to measure a loss.

### INDUSTRIAL APPLICABILITY

The resin composition for an optical waveguide according to the present invention is excellent in a compatibility of the respective components and has a high transparency in a wavelength of 1.3 µm, and it can readily form a thick film having an excellent adhesive property. Also, an optical waveguide prepared by using the above resin composition has a high transparency in a wavelength of 1.3 µm.

## Claims

1. A resin composition for an optical waveguide comprising (A) a photopolymerizable monomer, (B) a binder polymer and (C) a photoinitiator, wherein the photopolymerizable monomer (A) contains a hydroxyl group containing fluorinated mono(meth)acrylate base compound.

2. The resin composition for an optical waveguide according to claim 1, wherein the hydroxyl group containing fluorinated mono(meth)acrylate base compound is represented by the following Formula (I): 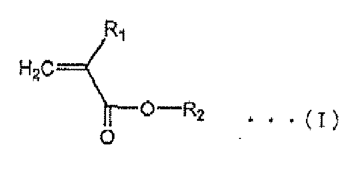 (in Formula (I), R₁ is hydrogen or an alkyl group having 1 to 4 carbon atoms which may have a substituent, and R₂ is a monovalent organic group containing a hydroxyl group and fluorine).

3. The resin composition for an optical waveguide according to claim 2, wherein the compound represented by Formula (I) is epoxy (meth)acrylate.

4. The resin composition for an optical waveguide according to claim 2, wherein R₂ in Formula (I) is represented by the following Formula (II): 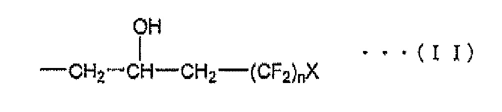 (n is an integer of 1 to 20, and X is hydrogen or fluorine).

5. The resin composition for an optical waveguide according to any of claims 1 to 4, wherein the photopolymerizable monomer (A) further contains at least one multifunctional (meth)acrylate.

6. The resin composition for an optical waveguide according to any of claims 1 to 5, wherein a content of the hydroxyl group containing fluorinated mono(meth)acrylate base compound in the component (A) is 0.1 to 100 % by mass.

7. The resin composition for an optical waveguide according to any of claims 1 to 6, wherein a content of the binder polymer (B) is 0.5 to 90 % by mass based on a total amount of the component (A) and the component (B).

8. The resin composition for an optical waveguide according to any of claims 1 to 7, wherein a content of the photoinitiator (C) is 0.1 to 10 parts by mass based on a total amount 100 parts by mass of the component (A) and the component (B).

9. A resin varnish for forming an optical waveguide comprising the resin composition according to any of claims 1 to 8 and an organic solvent.

10. A film for forming an optical waveguide prepared by using the resin composition according to any of claims 1 to 8.

11. An optical waveguide prepared by using the resin composition according to any of claims 1 to 8 as a material for a core.

12. An optical waveguide prepared by using the resin composition according to any of claims 1 to 8 as a material for a cladding.

13. An optical waveguide prepared by using the resin varnish for forming an optical waveguide according to claim 9 as a material for a core.

14. An optical waveguide prepared by using the resin varnish for forming an optical waveguide according to claim 9 as a material for a cladding.

15. An optical waveguide prepared by using the film for forming an optical waveguide according to claim 10 as a material for a core.

16. An optical waveguide prepared by using the film for forming an optical waveguide according to claim 10 as a material for a cladding.
